**Europäisches Patentamt**

**European Patent Office**

**Office européen des brevets**

(11) Veröffentlichungsnummer: **0 198 434**
A2

(12) **EUROPÄISCHE PATENTANMELDUNG**

(21) Anmeldenummer: **86104966.6**

(22) Anmeldetag: **11.04.86**

(51) Int. Cl.⁴: **G 11 B 23/03**, G 11 B 33/04

(30) Priorität: **16.04.85 DE 3513606**

(43) Veröffentlichungstag der Anmeldung: **22.10.86**
**Patentblatt 86/43**

(84) Benannte Vertragsstaaten: **AT BE CH DE FR GB IT LI LU NL SE**

(71) Anmelder: **Kurz Kunststoffe GmbH, Hauptstrasse 8, D-7452 Haigerloch - 3 (DE)**

(72) Erfinder: **Seifert, Josef, Nikolausweg 30, D-7451 Grosselfingen (DE)**

(74) Vertreter: **Patentanwälte Dipl.-Ing. Klaus Westphal Dr. rer. nat. Bernd Mussgnug Dr. rer.nat. Otto Buchner, Waldstrasse 33, D-7730 VS-Villingen (DE)**

(54) Verfahren und Vorrichtung zur Aufbewahrung flacher Aufzeichnungsträger.

(57) Die Erfindung ermöglicht die Verwendung von Original-verpackungen flacher, vorzugsweise scheibenförmiger Auf-zeichnungsträger als Schubfächer in einem gemeinsamen Auf-bewahrungsgehäuse. Es werden einfache und einfach zu mon-tierende Verriegelungs- und Ausfahreinrichtungen für diese Schubfächer angegeben.

EP 0 198 434 A2

ACTORUM AG

Dipl. Ing. **Klaus Westphal**

Dr. rer. nat. **Bernd Mussgnug**

Dr. rer. nat. **Otto Buchner**

**P A T E N T A N W Ä L T E**
**European Patent Attorneys**

Waldstrasse 33

D-7730 VS-VILLINGEN

Flossmannstrasse 30 a

D-8000 MÜNCHEN 60

Telefon. 07721-56007
Telegr.  Westbuch Villingen
Telex    5213177 webu d

Telefon  089-832446
Telegr.  Westbuch München
Telex    5213177 webu d
Telecop. 089-8344618
(CCITT 2) attention webu

**0198434**

- 1 -

u.Z.: 1566.7 EP

Kurz Kunststoffe GmbH

Hauptstraße 8

7452 Haigerloch 3 - Owingen

## Verfahren und Vorrichtung zur Aufbewahrung flacher

### Aufzeichnungsträger

Die Erfindung betrifft ein Verfahren nach dem Oberbegriff des Anspruchs 1 sowie eine Vorrichtung zur Durchführung dieses Verfahrens.

Als Aufzeichnungsträger werden hierbei scheibenförmige Daten- und Informationsträger, insbesondere Compact-Disc-Platten (CD-Platten), sowie flache magnetische Datenträger u. dgl. bezeichnet. Vor allem für bandförmige Aufzeichnungsträger in Form von Kassetten ist eine große Reihe von Aufbewahrungsverfahren und -vorrichtungen gemäß den Oberbegriffen der Ansprüche 1 und 2 bekannt. Bei allen bekannten Verfahren und Vorrichtungen dieser Art wird zur Aufbewahrung zunächst die beim Kauf des vorwiegend kassettenförmigen Aufzeichnungsträgers miterworbene, sehr aufwendige und kostspielige Kunststoff-

Postscheckkonto Karlsruhe 76979-754   Bankkonto: Deutsche Bank AG Villingen (BLZ 69470039) 146332

Originalverpackung entfernt und sodann die Kassette in ein Schubfach der Aufbewahrungsvorrichtung eingelegt. Abgesehen davon, daß die Originalverpackung mit originaler Bezeichnung und Beschriftung des Inhalts weggeworfen wird und nicht weiterverwendet werden kann, müssen darüber hinaus Vorkehrungen getroffen werden, die Bezeichnungen und Beschriftungen für die jeweils eingelegte Kassette oder dergleichen derart auf das Schubfach zu übertragen, daß sie von außen gut sichtbar sind.

Durch die Erfindung sollen Verfahren und Vorrichtung zur Aufbewahrung beliebiger flacher Aufzeichnungsträger wesentlich verbilligt und in der Handhabung vereinfacht werden.

Diese Aufgabe wird bei einem Verfahren der eingangs genannten Art erfindungsgemäß durch die kennzeichnenden Merkmale des Anspruchs 1 und bei einer Vorrichtung nach dem Oberbegriff des Anspruchs 2 durch die kennzeichnenden Merkmale des Anspruchs 2 gelöst.

Hierdurch kann nicht nur der wesentliche Teil der kostspieligen Originalverpackung mit Ausnahme des verhältnismäßig einfachen und billigen Deckels für die zweckmäßige Aufbewahrung in einer Aufbewahrungsvorrichtung weiterverwendet werden, sondern die Originalverpackung enthält auch insbesondere an der bei der Verwendung als Schubfach sichtbar bleibenden Vorderseite, gegebenenfalls aber auch an anderen Stellen des Verpackungs-Unterteils alle notwendigen Informationen über den Inhalt des Aufzeichnungsträgers, z.B. Titel, Autor, Interpret, Laufzeit usw. Dadurch wird eine zusätzliche Beschriftung oder Bezeichnung der Schubfächer überflüssig.

Für die Durchführung des erfindungsgemäßen Verfahrens ist lediglich ein geeignetes Gehäuse mit seitlichen Führungsschienen erforderlich, in welche die von den Deckeln befreiten Unterteile der Originalverpackungen als Schubfächer eingeschoben werden. Durch Herausziehen der Schubfächer läßt sich deren Inhalt bequem entnehmen, und nach Gebrauch kann das Schubfach wieder eingeschoben werden.

Bei einer bevorzugten Ausführungsform nach Anspruch 3 sind an sich bekannte Verriegelungshebel und federnde Auswerfervorrichtungen für die Schubfächer vorgesehen, wobei die entriegelten Verriegelungshebel selbsttätig in der Entriegelungsstellung gehalten werden, bis die Schubfächer wieder vollständig eingeschoben werden. Die Teile dieser Halteeinrichtungen können gemäß Anspruch 4 als selbsttätig einschnappende Haken und Gegenhaken ausgebildet sein.

Besonders zweckmäßige Ausbildungen des Verriegelungshebels, seiner Lagerung und Führung sowie seiner Federbelastung zwecks Ver- und Entriegelung des zugehörigen Schubfaches sind in den Ansprüchen 5 bis 9 unter Schutz gestellt. Durch die Abstützung des Verriegelungshebels mittels einer Druckfeder im Gehäuse kann mittels Fingerdruck auf das am vorderen Ende des Verriegelungshebels sitzende Betätigungsorgan nicht nur die Entriegelung des Schubfaches, sondern gleichzeitig auch das Einrasten der Halteeinrichtung für den Verriegelungshebel in der entriegelten Stellung betätigt werden. Durch das vollständige Einfahren des Schubfaches wird andererseits selbsttätig eine geringfügige Längsverschiebung des Verriegelungshebels entgegen der Kraft der am rückwärtigen Ende abgestützten Druckfeder und dadurch eine Entriegelung der Halteeinrichtung bewirkt, so daß der Verriegelungshebel wieder in die Verriegelungsstellung einschnappt. Der Verriegelungshebel wird vorzugsweise durch elastische Verbiegung in seiner entriegelten Stellung gehalten und schnappt bei Lösung der Halteeinrichtung selbsttätig in die Verriegelungsstellung zurück, sobald das vollständig eingeschobene Schubfach diese freigibt.

Die Federeinrichtung zum Ausfahren des Schubfaches kann entweder gemäß Anspruch 10 als Ausfahrblattfeder oder gemäß Anspruch 11 als Kniehebel ausgebildet sein, welche jeweils an der hinteren Innenwand des Gehäuses angeordnet und mit dem Verriegelungshebel einstückig ausgebildet sind. Während die Ausfahrblattfeder bei Entriegelung des Schubfaches selbsttätig zur Wirkung kommt, wird der Kniehebel durch eine quer zur Ausfahrrichtung im Gehäuse abgestützte Schraubendruckfeder belastet, so daß er bei Entriegelung auf das Schubfach einwirkt.

Gemäß Anspruch 12 kann der Verriegelungshebel samt Blattfeder und Auswerferblattfeder bzw. Kniehebel aus einem einzigen Kunststoffteil gespritzt sein, was nicht nur die Herstellung außerordentlich vereinfacht und verbilligt, sondern auch die Montage und Wirkungsweise der einander zugeordneten Teile bequem und sicher macht.

Gemäß Anspruch 13 ist eine Verriegelung des Schubfaches in einer Zwischenstellung möglich, aus der es zwar jederzeit vollständig eingefahren werden kann, gegen ein weiteres Herausfahren jedoch verriegelt ist. Diese Zwischenstellung ist eine Art Gedächtnis- oder Memory-Stellung, damit durch das geringfügige Vorstehen des betreffenden Schubfaches über die Vorderfläche des Gehäuses sofort ersichtlich ist, aus welchem Schubfach der gerade verwendete Aufzeichnungsträger jeweils entnommen wurde.

Damit die Schubfächer beim Entriegeln des Verriegelungshebels nicht vollständig aus dem Gehäuse herausfallen, sondern in einer Entnahmestellung gehalten werden, in der der Aufzeichnungsträger entnommen werden kann, sind gemäß Anspruch 14 einerseits an Führungsschienen, andererseits an den Verriegelungshebeln jeweils elastische Haltenasen vorgesehen, die den querverlaufenden hinteren Rand des Schubfaches festhalten. Beim erstmaligen Einschieben des Schubfaches können diese Haltenasen jedoch dem hinteren Rand elastisch ausweichen. Dabei sind zweckmäßigerweise die Führungsschienen so geformt, daß in der Entnahmestellung jedes Schubfach durch Schwerkraft in eine leicht geneigte Stellung abkippt, so daß das Entnehmen des Aufzeichnungsträgers erleichtert wird. Dies kann in einfacher Weise durch Aussparungen bzw. Vorsprünge der Führungsschienen bewirkt werden.

Zur leichteren Montage der ganzen Aufbewahrungsvorrichtung kann gemäß Anspruch 16 das Gehäuse aus zwei zusammenschnappbaren Teilen gebildet sein. Dadurch wird das Einlegen der Verriegelungshebel und der damit verbundenen Teile wesentlich erleichtert.

Damit mehrere gleichartige Aufbewahrungsvorrichtungen gemäß der Erfindung neben- und übereinander gestapelt werden können, können gemäß Anspruch 17 an der Außenseite des Gehäuses geeignete Einschnapprasten vorgesehen werden, in die geeignet geformte Laschen eingedrückt werden können. Die Laschen sind durch biegsame Filmscharniere mit einer gleichartigen, spiegelbildlich angeordneten Lasche verbunden, die in eine Einschnappraste eines anderen Gehäuses eingedrückt werden kann. Bei einer Anordnung zweier so verbundener Gehäuse nebeneinander befinden sich die beiden Laschen in gestreckter Lage, während bei der Anordnung übereinander das dazwischenliegende Filmscharnier um 180° gebogen ist. So läßt sich eine ausreichende Festlegung mehrerer Gehäuse aneinander in sehr einfacher und schneller Weise bei geringem Herstellungsaufwand erreichen. Die Laschen bestehen dabei vorzugsweise aus elastischem Kunststoff.

Anhand der Figuren wird ein bevorzugtes Ausführungsbeispiel der erfindungsgemäßen Aufbewahrungsvorrichtung näher erläutert. Es zeigt

Fig. 1 eine Schrägansicht der gesamten Aufbewahrungsvorrichtung mit Verpackungs-Unterteilen von CD-Platten als Schubfächern,

Fig. 2 eine teilweise vertikal geschnittene Vorderansicht der in Fig. 1 gezeigten Vorrichtung,

Fig. 3 eine Seitenansicht der in Fig. 1 gezeigten Vorrichtung, wobei das Gehäuse teilweise aufgebrochen ist,

Fig. 4 einen Horizontalschnitt längs der Linie IV-IV in Fig. 3,

Fig. 5 einen der Fig. 4 entsprechenden Schnitt bei vollständig eingefahrenem Schubfach und

Fig. 6 einen den Fig. 4 und 5 entsprechenden Teilschnitt bei in Memory-Stellung befindlichem
Schubfach.

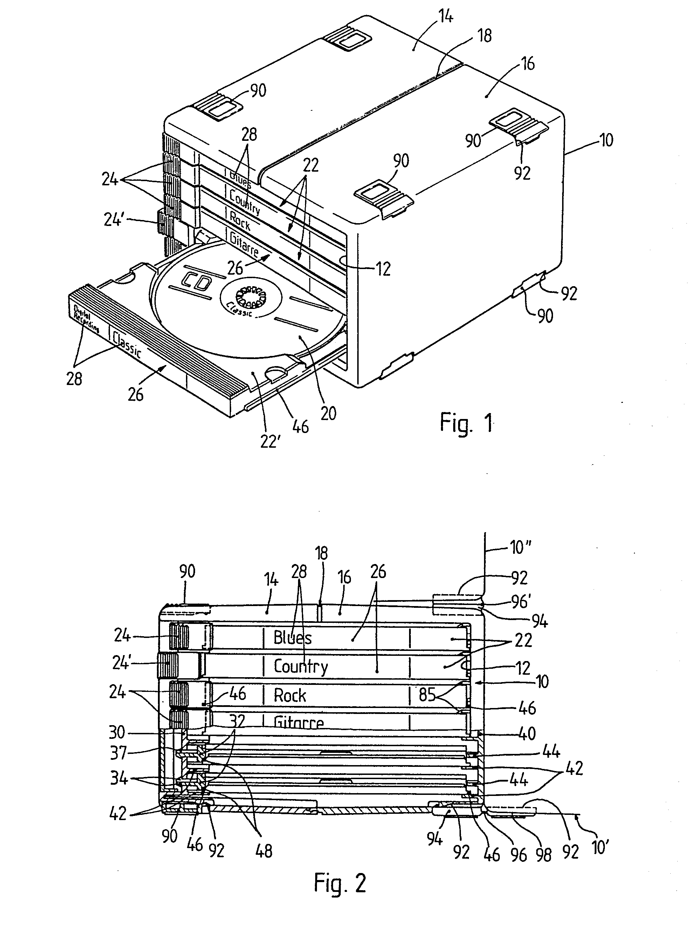

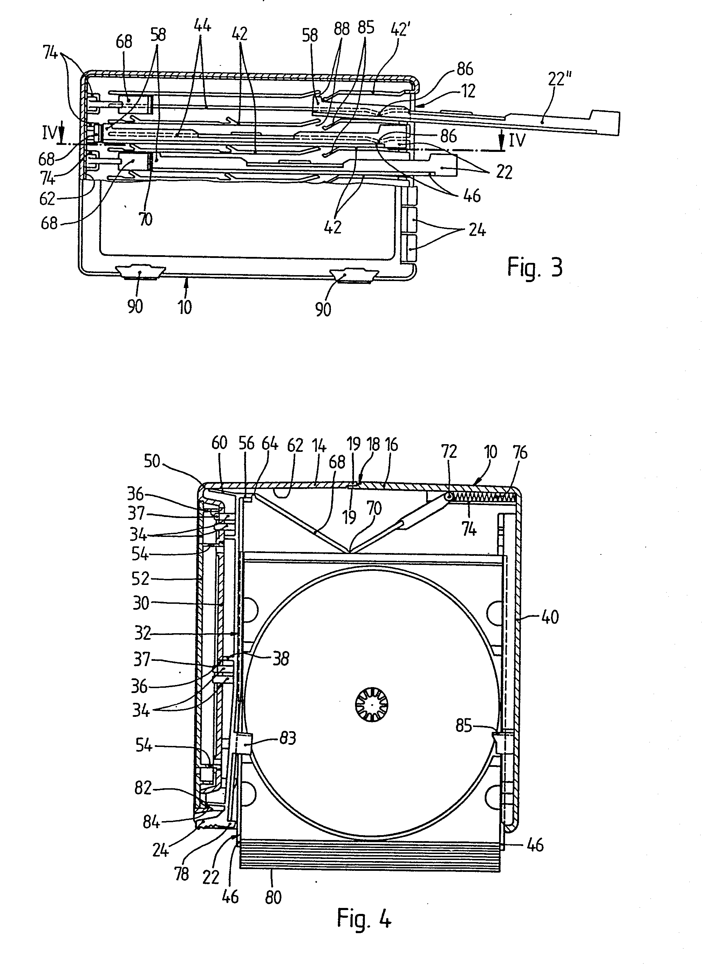

Die in den Figuren dargestellte Vorrichtung weist ein allgemein etwa kubisches Gehäuse 10 aus Kunststoff auf, dessen Vorderfläche 12 im wesentlichen offen ist. Das Gehäuse besteht aus zwei Teilen 14 und 16, die längs einer in der vertikalen Mittelebene des Gehäuses verlaufenden Trennfuge 18 mittels elastisch ineinander schnappbarer Verbindungsleisten 19 (Fig. 2 und 4) zusammengefügt sind. In die offene Vorderseite 12 des Gehäuses 10 sind die Unterteile der Originalverpackungen von CD-Platten 20 als Schubfächer 22 flach übereinander liegend eingeschoben. Durch Betätigung eines Betätigungsorgans 24', wobei dieses gegenüber den Betätigungsorganen 24 der übrigen Schubfächer etwas nach links verschoben wird, ist ein Schubfach 22' selbsttätig in die ausgefahrene Stellung herausgeschoben worden, in der die CD-Platte 20 bequem entnommen werden kann. In üblicher Weise sind die Vorderseiten 26 der die Schubfächer 22, 22' bildenden Verpackungs-Unterteile mit den Informationen 28 über den Inhalt der CD-Platte versehen.

Aus Fig. 4 ist ersichtlich, daß sich entlang einer Seitenwand 30 des Gehäuses 10 zwischen dieser und dem Schubfach 22 über die ganze Tiefe des Gehäuses 10 vom Betätigungsorgan 24 ausgehend ein langgestreckter Verriegelungshebel 32 aus elastischem Material, vorzugsweise Kunststoff, erstreckt, der mit seitlich von ihm abstehenden Führungszapfen 34 durch kurze Führungsschlitze 36 der Seitenwand 30 greift. Aus Fig. 2 ist ersichtlich, daß die Führungszapfen 34 mit Haken 37 versehen sind, die hinter die Seitenwand 30 greifen und dadurch den Verriegelungshebel 32 parallel zur Seitenwand 30 gleitend verschiebbar in den Führungsschlitzen 36 lagern. Auf der Innenseite der Seitenwand 30 ist der Verriegelungshebel 32 mittels Stegen 38 gleitend abgestützt.

Es wird bemerkt, daß alle gleichen und gleichartigen Teile der Anordnung in den verschiedenen Etagen der Aufbewahrungsvorrichtung mit gleichen Bezugszeichen versehen sind.

Aus den Fig. 2 und 3 ist zu sehen, daß die Ränder der Unterseite der Schubfächer 22 auf aus den Seitenwänden 30 und 40 des Gehäuses 10 nach innen ragenden unteren Führungsschienen 42 gleitend gelagert sind. Eine seitliche Führung der Schubfächer 22 erfolgt einerseits durch die Verriegelungshebel 32 und andererseits durch obere Führungsschienen 44, die von der Seitenwand 40 zwischen den unteren Führungsschienen 42 nach innen ragen. An den unteren Rändern der Schubfächer 22 nach außen stehende Deckelauflageleisten 46 ragen dabei einerseits in einen entsprechenden Ausschnitt 48 der Verriegelungshebel 32 und andererseits zwischen die unteren und oberen Führungsleisten 42 bzw. 44.

Wie aus den Fig. 2 und 4 ersichtlich, ist die, von vorne gesehen, linke Seitenwand 30 vom äußeren Rand 50 des Gehäuses 10 etwas nach innen gezogen und eine mit dem Gehäuse bündig abschließende Außenwand 52 ist mittels Einschnappstegen 54 an der Seitenwand 30 befestigt, so daß die durch die Schlitze 36 greifenden Führungszapfen 34 sich mit ihren Haken 37 im Zwischenraum zwischen der Seitenwand 30 und der Außenwand 52 bewegen und somit nach außen verdeckt sind.

Jeder Betätigungshebel 32 ist an seinem hinteren Ende mit einem Anschlag 56 für den hinteren Rand 58 des zugehörigen Schubfaches 22 versehen. Vom Anschlag 56 ragt schräg nach außen und hinten eine einstückige Kunststoffblattfeder 60 ab, die an der hinteren Innenwand 62 des Gehäuses abgestützt ist. Ebenfalls einstückig ist mit dem Anschlag 56 über ein biegsames verdünntes Scharnierteil 64 ein Kniehebel 68 verbunden, dessen beide Schenkel ebenfalls über ein verdünntes biegsames Scharnierteil 70 verbunden sind. Das entgegengesetzte Ende des Kniehebels 68 ist mit einem Zapfen 72 versehen, der im Zwischenraum zwischen der hinteren Innenwand 62 und einem parallel dazu verlaufenden Führungsschacht 74 gleitend verschiebbar ist. Der Zapfen 72 ist von einer zwischen Innenwand 62 und Führungswand 74 gehaltenen Schraubendruckfeder 76 quer zur Ausfahrrichtung des Schubfaches 22 belastet.

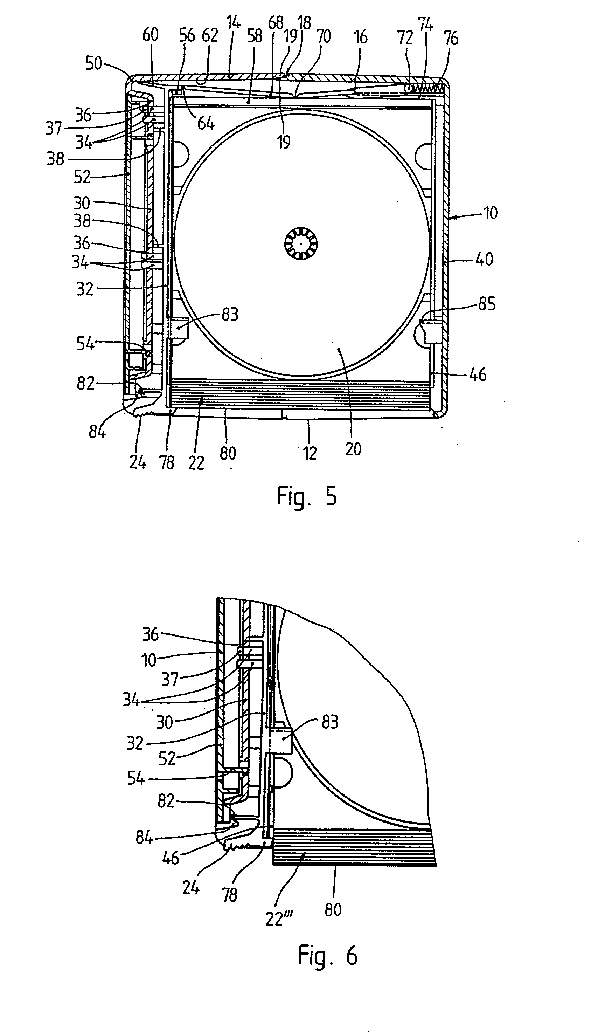

Wie aus Fig. 5 ersichtlich, liegt der Verriegelungshebel 32 in seiner Normalstellung seitlich am vollständig eingefahrenen Schubfach 22 an und greift mit einer Verriegelungsnase 78 am vorderen Rand 80 desselben an, wodurch das Schubfach gegen ein Ausfahren verriegelt ist. Bei Betätigung des am vorderen Ende des Verriegelungshebels 32 sitzenden Betätigungsorgans 24 wird dieses mit dem vorderen Ende des Betätigungshebels leicht nach außen gezogen, bis die Verriegelungsnase 78 den vorderen Rand 80 freigibt. In diesem Moment schnappt ein vom vorderen Ende des Verriegelungshebels 32 nach außen ragender Haken 82 in einen fest mit dem Gehäuse verbundenen, von diesem nach innen stehenden und eine Halteeinrichtung für den vorderen Abschnitt des Verriegelungshebels 32 bildenden Gegenhaken 84 ein. Dadurch wird der Verriegelungshebel 32 vorläufig in der Entriegelungsstellung festgelegt. Die Belastung des Verriegelungshebels 32 in Richtung nach vorne, die für ein festes Einschnappen des Hakens 82 am Gegenhaken 84 erforderlich ist, wird dabei von der an der hinteren Innenwand 62 abgestützten Blattfeder 60 besorgt.

Mit der Festlegung des Verriegelungshebels 32 in seiner entriegelten Stellung wird das Schubfach 22 für seine Ausfahrbewegung freigegeben. In diesem Augenblick kommt der mit seiner Knickstelle 70 am hinteren Rand 58 des Schubfaches 22 anliegende Kniehebel 68 unter der Wirkung der Schraubendruckfeder 76 zum Ausknicken bis etwa in die Stellung der Fig. 4. Durch diese Ausknickbewegung des Kniehebels 68 wird das Schubfach 22 so weit ausgefahren, daß es von Hand ergriffen und vollständig in die vollständig ausgefahrene Stellung gemäß dem Schubfach 22' in Fig. 1 bzw. 22" in Fig. 3 ausgezogen werden kann. In dieser voll ausgefahrenen Stellung kommt der hintere Rand 58 jedes Schubfaches 22 an Haltenasen 83 bzw. 85 zum Anschlag, die einerseits vom jeweiligen Verriegelungshebel 32 und andererseits von der jeweils oberhalb des Schubfaches liegenden unteren Führungsschiene 42 schräg nach innen und unten ragen. Dabei ist oberhalb des obersten Schubfaches 22" noch eine untere Führungsschiene 42' angeordnet, auf der kein weiteres Schubfach 22 läuft. Beim ersten Einschieben eines Schubfaches 22 in das Gehäuse 10 geben die Haltenasen 83 und 85 beim Durchgang des hinteren Randes 58 elastisch nach, während sie sich gegen ein Herausziehen des hinteren Randes 58 einspreizen.

Zur oberseitigen Führung der am unteren Rand jedes Schubfaches 22 seitlich vorstehenden Deckelanschlagleisten 46 auf der dem Verriegelungshebel 32 gegenüberliegenden Seite weisen die oberen Führungsschienen 44 nahe ihrem vorderen Ende eine knickförmige Einsattelung 86 nach unten auf, deren Spitze auf den Deckelanschlagleisten 46 gleitend zur Anlage kommt. Infolge der Anordnung dieser Einsattelungen 86 und einer Anhebung 88 der darüber befindlichen unteren Führungsschienen 42, in die der hintere Rand 58 nach oben eindringen kann, ergibt sich durch die Schwere des herausgezogenen Abschnitts der Schubfächer 22 die in Fig. 3 beim Schubfach 22" dargestellte, leicht nach unten abgekippte Lage, in der das Entnehmen der CD-Platte 20 erleichtert ist.

Nach der Entnahme der CD-Platte zum Gebrauch kann das leere Schubfach in die Stellung 22''' gemäß Fig. 6 eingeschoben werden, in der es bereits wieder vom Kniehebel 68 belastet ist. Die Verriegelungsnase 78 des Verriegelungshebels 32 greift aber in dieser Stellung am vorderen Ende der Deckelanschlagleiste 46 ein und verriegelt dadurch das Schubfach 22''' in dieser leicht aus der Vorderseite 12 des Gehäuse 10 vorstehenden Memory-Stellung, durch die der Benutzer daran erinnert wird, aus welchem Schubfach er die CD-Platte entnommen hat. Zum Einlegen der CD-Platte wird nochmals das Betätigungsorgan 24 nach außen gezogen und das Schubfach 22 vollständig ausgefahren. Nach dem Einlegen der CD-Platte 20 kann sodann das Schubfach 22 in die voll eingefahrene Stellung gemäß Fig. 5 gedrückt werden. Durch das Anschlagen des hinteren Randes 58 am Anschlag 56 des Verriegelungshebels 32 wird dieser gegen die Kraft der Blattfeder 60 leicht nach hinten verschoben, so daß der Haken 82 vom Gegenhaken 84 freigegeben wird und der vordere Abschnitt des Verriegelungshebels 32 durch seine Eigenelastizität in die Verriegelungsstellung gemäß Fig. 5 schnappt, in der die Verriegelungsnase 78 am vorderen Rand 80 des Schubfaches 22 eingreift.

An der Außenseite des Gehäuses sind nahe den Ecken desselben aus einem elastischen Kunststoff hergestellte Einschnappteile 90 in dafür vorgesehene leicht hinterschnittene Einschnapprasten 92 des Gehäuses eingeschnappt. Diese Einschnappteile 90 können an der Unterseite als Standfüße zur Aufstellung des Gehäuses dienen.
Die Einschnappteile 90 sind leicht aus den Einschnapprasten
92 von Hand herauszunehmen und durch in die Einschnapprasten 92 einzuschnappende Laschen 94 in der aus Fig. 2
ersichtlichen Weise zu ersetzen. Die Laschen 94 sind
ebenfalls aus Kunststoff hergestellt und hängen über
ein biegsames Filmscharnier 96 mit einer gleichartigen,
spiegelbildlich zur ersten Lasche angeordneten zweiten
Lasche 98 zusammen. Diese Lasche 98 kann in eine entsprechende Einschnapprastе 92 eines neben dem Gehäuse 10
angeordneten Gehäuses 10' oder aber bei Umbiegung des
Filmscharniers 96' um 180° in die Einschnapprastе 92
eines über dem Gehäuse 10 angeordneten Gehäuses 10"
eingeschnappt werden. Durch diese Doppellaschen wird
eine weitgehend stabile Lagerung mehrerer gleichartiger
Gehäuse neben- und übereinander gewährleistet.

Dipl. Ing. Klaus Westphal

Dr. rer. nat. Bernd Mussgnug

Walastrasse 33

D-7730 VS-ViLLINGEN

Teleton 07721-56007
Telegr. Westbuch Villingen
Telex 5213177 webu d

Dr. rer. nat. Otto Buchner

PATENTANWÄLTE
European Patent Attorneys

Flossmannstrasse 30a

D-8000 MÜNCHEN 60

Telefon 089-832446
Telegr. Westbuch München
Telex 5213177 webu d
Telecop. 089-8344618
(CCITT 2) attention webu

u.Z.: 1566.7 EP

## PATENTANSPRÜCHE

1. Verfahren zur Aufbewahrung flacher Aufzeichnungsträger in an ihrer Oberseite offenen Schubfächern, die in ein Gehäuse einschiebbar und in eine Entnahmestellung für die Aufzeichnungsträger ausfahrbar sind, dadurch gekennzeichnet, daß als Schubfächer (22) die oben offenen Unterteile von handelsüblichen Originalverpackungen der Aufzeichnungsträger (20) verwendet werden, nachdem deren Deckel entfernt worden sind.

2. Vorrichtung zur Durchführung des Verfahrens nach Anspruch 1, mit einem eine offene Vorderseite aufweisenden Gehäuse und in diesem seitlich geführten Schubfächern zur Aufnahme der Aufzeichnungsträger, dadurch gekennzeichnet, daß die Schubfächer (22) aus den Unterteilen der Originalverpackungen bestehen, deren seitliche Ränder zwischen Führungsschienen (42, 44) an der Innenseite des Gehäuses (10) laufen.

3. Vorrichtung nach Anspruch 2, mit einem in der eingeschobenen Stellung jedes Schubfaches selbsttätig einschnappenden Verriegelungshebel für das Schubfach, der durch Fingerdruck auf ein Betätigungsorgan an der Vorderseite des Gehäuses entriegelbar ist, und mit einer bei Entriegelung das Schubfach ausfahrenden

Postscheckkonto Karlsruhe 76979-754  Bankkonto: Deutsche Bank AG Villingen (BLZ 69470039) 146332

0198434

Federeinrichtung, dadurch gekennzeichnet, daß zur Festlegung des Verriegelungshebels (32) in der entriegelten Stellung dieser in eine Stellung drückbar ist, in der ein mit dem Verriegelungshebel (32) fest verbundenes Halteorgan (82) in eine Halteeinrichtung (84) einschnappt.

4. Vorrichtung nach Anspruch 3, dadurch gekennzeichnet, daß das Halteorgan (82) aus einem vom Verriegelungshebel (32) nach außen ragenden Haken besteht, der in einen vom Gehäuse (10) nach innen stehenden Gegenhaken (84) einschnappt.

5. Vorrichtung nach einem der Ansprüche 2 bis 4, dadurch gekennzeichnet, daß der Verriegelungshebel (32) sich an einer Seite des Schubfaches (22) über die ganze Tiefe des Gehäuses (10) von dem sein vorderes Ende bildenden Betätigungsorgan (24) bis etwa zur hinteren Innenwand (62) des Gehäuses (10) erstreckt.

6. Vorrichtung nach Anspruch 5, dadurch gekennzeichnet, daß das Halteorgan (82) des Verriegelungshebels (32) durch leichte Verschiebung des Verriegelungshebels (32) nach hinten beim vollständigen Einfahren des Schubfaches (22) selbsttätig aus der Halteeinrichtung (84) lösbar ist.

7. Vorrichtung nach Anspruch 6, dadurch gekennzeichnet, daß der Verriegelungshebel (32) Führungszapfen (34) aufweist, die in Führungsschlitzen (36) im Gehäuse (10) gleitend geführt sind, welche eine geringe Längsbewegung des Verriegelungshebels (32) bezüglich des Gehäuses (10) zulassen.

8. Vorrichtung nach Anspruch 7, dadurch gekennzeichnet, daß am hinteren Ende des Verriegelungshebels (32) eine ihn nach vorne belastende Druckfeder (60) angreift, die sich an der hinteren Innenwand (62) des Gehäuses (10) abstützt.

9. Vorrichtung nach Anspruch 8, dadurch gekennzeichnet, daß die Druckfeder (60) als mit dem Verriegelungshebel (32) einstückige Blattfeder ausgebildet ist.

10. Vorrichtung nach einem der Ansprüche 2 bis 9, dadurch gekennzeichnet, daß die Federeinrichtung zum Ausfahren jedes Schubfaches (22) als mit dem Verriegelungshebel (32) einstückige, an der hinteren Innenwand (62) des Gehäuses (10) abgestützte Auswerferblattfeder ausgebildet ist.

11. Vorrichtung nach einem der Ansprüche 2 bis 9, dadurch gekennzeichnet, daß die Federeinrichtung zum Auswerfen jedes Schubfaches (22) als mit dem Verriegelungshebel (32) einstückiger Kniehebel (68) ausgebildet ist, der durch eine quer zur Ausfahrrichtung des Schubfaches (22) im Gehäuse (10) abgestützte Schraubendruckfeder (76) belastet ist.

12. Vorrichtung nach einem der Ansprüche 9 bis 11, dadurch gekennzeichnet, daß Verriegelungshebel (32), Blattfeder (60) und Auswerferblattfeder bzw. Kniehebel (68) einen einstückigen Kunststoffteil bilden.

13. Vorrichtung nach einem der Ansprüche 2 bis 12, dadurch gekennzeichnet, daß der Verriegelungshebel (32) das Schubfach (22) in einer Zwischenstellung selbsttätig in Richtung nach außen verriegelt, wobei das Schubfach (22) in dieser Stellung nur geringfügig aus der von den übrigen Schubfächern (22) gebildeten Vorderfläche (12) des Gehäuses (10) vorsteht.

14. Vorrichtung nach einem der Ansprüche 2 bis 13, dadurch gekennzeichnet, daß von oberhalb des jeweiligen Schubfaches (22) angeordneten Führungschienen (42) bzw. vom Verriegelungshebel (32) jeweils im vorderen Abschnitt derselben eine elastische Haltenase (83, 85) nach innen und unten ragt, an der der hintere Rand (58) des Schubfaches (22) beim Ausfahren zum Anschlag kommt, die beim erstmaligen Einsetzen des Schubfaches (22) jedoch elastisch ausweicht.

15. Vorrichtung nach Anspruch 14, dadurch gekennzeichnet, daß in einer bis zur Anlage des hinteren Randes (58) des Schubfaches (22) an den Haltenasen (83, 85) ausgefahrenen Stellung jedes Schubfach (22) durch Schwerkraft in eine leicht geneigte Stellung abkippbar ist.

16. Vorrichtung nach einem der Ansprüche 2 bis 15, dadurch gekennzeichnet, daß das Gehäuse (10) aus zwei längs einer Trennfuge (18) verbundenen Gehäuseteilen (14, 16) besteht, wobei an den Trennfugen (18) elastisch ineinander schnappende Verbindungsleisten (19) vorgesehen sind.

17. Vorrichtung nach einem der Ansprüche 2 bis 16, dadurch gekennzeichnet, daß an der Außenseite des Gehäuses (10) nahe dessen Kanten Einschnapprasten (92) vorgesehen sind, in die eine Lasche (94) durch Druckausübung einschnappbar ist, die über ein biegsames Filmscharnier (96) mit einer gleichartigen, spiegelbildlich angeordneten Lasche (98) verbunden ist.

0198434

1/3

Fig. 1

Fig. 2

Fig. 3

Fig. 4

3/3

0198434

Fig. 5

Fig. 6